(19) Europäisches Patentamt
European Patent Office
Office européen des brevets

(11) EP 0 622 435 B1

(12) EUROPÄISCHE PATENTSCHRIFT

(45) Veröffentlichungstag und Bekanntmachung des Hinweises auf die Patenterteilung:
**11.12.1996 Patentblatt 1996/50**

(21) Anmeldenummer: **94105769.7**

(22) Anmeldetag: **14.04.1994**

(51) Int Cl.[6]: **C09J 175/04**, C09D 175/04
// (C09J175/04, 133:02),
(C09J175/04, 135:00),
(C09D175/04, 133:02),
(C09D175/04, 135:00)

(54) **Polyurethandispersion, enthaltend ein radikalisches Polymerisat mit Metallsalzgruppen**

Polyurethane dispersion containing a radical polymerisate having metal saltgroups

Dispersion de polyuréthante contenant un polymérisat radicalaire ayant des groupes de sel métallique

(84) Benannte Vertragsstaaten:
**BE DE ES FR GB IT NL SE**

(30) Priorität: **30.04.1993 DE 4314236**

(43) Veröffentlichungstag der Anmeldung:
**02.11.1994 Patentblatt 1994/44**

(73) Patentinhaber: **BASF Aktiengesellschaft**
**67063 Ludwigshafen (DE)**

(72) Erfinder:
- **Ley, Gregor, Dr.**
  **D-67319 Wattenheim (DE)**
- **Wallon, Alexander, Dr.**
  **D-67117 Limburgerhof (DE)**
- **Auchter, Gerhard, Dr.**
  **D-67098 Bad Duerkheim (DE)**
- **Maempel, Lothar, Dr.**
  **D-68782 Bruehl (DE)**
- **Seibert, Horst**
  **D-67136 Fussgoenheim (DE)**
- **Wistuba, Eckehardt, Dr.**
  **D-67098 Bad Duerkheim (DE)**
- **Haeberle, Karl, Dr.**
  **D-67346 Speyer (DE)**

(56) Entgegenhaltungen:
**EP-A- 0 379 158** **FR-A- 2 087 885**

EP 0 622 435 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft eine wäßrige Dispersion, enthaltend

A) ein Polyurethan, im wesentlichen aufgebaut aus

a) organischen Polyisocyanaten

b) Polyhydroxylverbindungen mit einem Molekulargewicht über 500 bis 5000 g/mol

c) Verbindungen mit mindestens einer gegenüber Isocyanaten reaktiven Gruppe und mit mindestens einer ionischen Gruppe oder in eine ionische Gruppe überführbaren Gruppe

d) gegebenenfalls von c) verschiedenen Verbindungen mit mindestens zwei gegenüber Isocyanat reaktiven funktionellen Gruppen und einem Molgewicht von 60 bis 500 g/mol

und 0.1 bis 70 Gew.-%, bezogen auf das Polyurethan

B) eines radikalisch polymerisierten Polymerisates mit einem Gehalt an Metallsalzgruppen, gebildet aus mindestens zweiwertigen Metallen mit Säuregruppen des Polymerisats, wobei der Salzgruppengehalt 5 bis 1000 mmol Salzgruppen pro kg der Summe von A) und B) beträgt.

Zur Vermeidung von Lösemittelabfällen und -emissionen finden zunehmend wäßrige Polymerdisperionen, insbesondere auch Polyurethandispersionen, als Klebstoffe Verwendung. Polyurethandispersionen sind z.B. in der DE-A-39 03 538 und DE-A-14 95 745 beschrieben. Da die mechanischen Eigenschaften, insbesondere die Wärmestandfestigkeit, von mit derartigen Dispersionen erhältlichen Verklebungen oft unzureichend sind, werden sie z.B. durch Zusatz von Polyisocyanaten, wie sie z.B. in der EP-A-02 08 059 und US-A-47 62 880 beschrieben sind, vernetzt. Diese Art der Vernetzung hat allerdings den Nachteil, daß die Topfzeit, d.h. die Zeit, die nach Zugabe des Vernetzers für die Verarbeitung verbleibt, sehr kurz ist.

Die Vernetzung von Polyurethandispersionen mittels polyvalenter Metallkomplexe ist aus der EP-A 228 481 bekannt. Gegenstand der EP-A-228 481 sind wieder entfernbare Fußbodenbeschichtungen.

Aus der nicht-veröffentlichten deutschen Patentanmeldung P 4137556.4 sind Polyurethandispersionen bekannt, die ein haftungsverbesserndes Polymer und anorganische Salze enthalten.

Aus der EP-A-373 918 und DE-A-4 004 915 (O.Z. 0050/41405) sind radikalische Polymerisate mit einem Gehalt an Metallsalzgruppen bekannt. Sie werden insbesondere als Bindemittel für Beschichtungen verwendet.

Aufgabe der vorliegenden Erfindung waren Polyurethandispersionen, welche bei der Verwendung als Klebstoff eine verbesserte Wärmestandfestigkeit zeigen.

Demgemäß wurde die oben definierte wäßrige Dispersion sowie ihre Verwendung als Klebstoff gefunden.

Das Polyurethan ist im wesentlichen, bevorzugt ausschließlich, aufgebaut aus den Komponenten a-d). Bei den gegenüber Isocyanat reaktiven funktionellen Gruppen handelt es sich um Hydroxyl-, primäre oder sekundäre Aminogruppen.

Als Polyisocyanate (a) sind insbesondere aliphatische, cycloaliphatische und aromatische Diisocyanate geeignet. Vorzugsweise werden solche mit der allgemeinen Formel $X(NCO)_2$ eingesetzt, wobei X für einen aliphatischen Kohlenwasserstoffrest mit 4 bis 12 C-Atomen, einen cycloaliphatischen mit 6 bis 15 Atomen oder einen aromatischen Kohlenwasserstoffrest mit 6 bis 15 C-Atomen steht.

Geeignete aliphatische, cycloaliphatische und aromatische Diisocyanate sind z.B. 1,4-Butandiisocyanat, 1,6-Hexandiisocyanat, 2,2,4- und 2,4,4-Trimethylhexamethylendiisocyanat, Cyclohexandiisocyanat, Methylcyclohexandiisocyanat, Isophorondiisocanat, 4,4'-Diisocyanatodiphenylmethan, 4,4'-Diisocyanatodicyclohexylmethan, 2,4- und 2,6-Toluylendiisocyanat, Tetramethylxylylendiisocyanat (TMXDI).

Es können auch Gemische der Diisocyanate eingesetzt werden. Insbesondere haben sich Gemische von aliphatischen bzw. cycloaliphatischen Diisocyanaten mit aromatischen Diisocyanten im Molverhältnis von 1:4 bis 5:1 als geeignet erwiesen.

Neben den Diisocyanaten können in untergeordneten Mengen auch Monoisocyanate zur Molekulargewichtsregulierung eingesetzt werden.

Mitverwendet werden können ebenfalls Verbindungen mit mehr als 2 Isocyanatgruppen, wie Biurete oder Isocyanurate, z.B. des Isophorondiisocyanates oder 1,6-Hexamethylendiisocyants.

Geeignete Polyhydroxylverbindungen, insbesondere Dihydroxylverbindungen (b), mit einem Molekulargewicht über 500 bis 5000 sind die bekannten Polyester, Polyether, Polythioether, Polylactone, Polyacetale, Polycarbonate

und Polyesteramide mit 2 Hydroxylgruppen. Bevorzugt sind solche Dihydroxylverbindungen, deren Molekulargewicht zwischen 750 und 3000 liegt. Selbstverständlich können auch Gemische dieser Dihydroxylverbindungen eingesetzt werden.

Zusätzlich eingesetzt werden können gegebenenfalls auch Verbindungen mit mehr als 2 Hydroxylgruppen, z.B. mit Polypropylenoxid alkoxyliertes Trimethylolpropan oder Glycerin.

Als von b) verschiedene Komponente (c) geeignet sind z.B. aliphatische, cycloaliphatische oder aromatische Mono- oder Dihydroxycarbonsäuren. Bevorzugt sind Dihydroxyalkylcarbonsäuren, insbesondere mit 3 bis 10 C-Atomen, wie sie auch in der US-A-3 412 054 beschrieben sind. Insbesondere bevorzugt sind Verbindungen der allgemeinen Formel

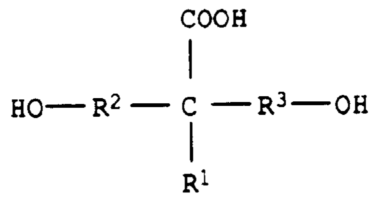

in welcher $R^1$ für ein Wasserstoffatom oder einen Alkylrest mit 1 bis 4 Kohlenstoffatomen und $R^2$ sowie $R^3$ für eine $C_1$-$C_4$-Alkylengruppe stehen. Beispielsweise genannt sei 2,2-Dimethylolpropionsäure.

Erwähnenswert sind weiterhin eine oder zwei Hydroxylgruppen bzw. Aminogruppen enthaltende tertiäre Ammoniumsalze sowie Aminocarbonsäuren oder Aminosulfonsäuren z.B. Lysin, -Alanin, N-(2-Aminoethyl)-2-aminoethansulfonsäure und die in der DE-A-20 34 479 genannten Addukte von aliphatischen diprimären Diaminen an -olefinische Carbonsäuren, z.B. das Addukt von Ethylendiamin an Acrylsäure.

Aufbaukomponente (c) enthält Ionengruppen bzw. in Ionengruppen überführbare Gruppen, um die Dispergierbarkeit des Polyurethans in Wasser zu gewährleisten. Ihr Anteil beträgt üblicherweise 0,03 bis 0,5 Grammäquivalent, vorzugsweise 0,05 - 0,4 Grammäquivalent, bezogen auf 1 Mol Isocyanatgruppen.

Zur Überführung von potentiellen anionischen Gruppen, z.B. Carbonsäuregruppen oder Sulfonsäuregruppen in Ionengruppen können anorganische und/oder organische Basen wie Natriumhydroxid, Kaliumhydroxid, Kaliumcarbonat, Natriumhydrogencarbonat, Ammoniak oder primäre, sekundäre und besonders tertiäre Amine, z.B. Triethylamin oder Dimethylaminopropanol eingesetzt werden.

Zur Überführung der potentiellen kationischen Gruppen, z.B. der tertiären Aminogruppen in die entsprechenden Kationen, z.B. Ammoniumgruppen, sind als Neutralisationsmittel anorganische oder organische Säuren, z.B. Salzsäure, Essigsäure, Fumarsäure, Maleinsäure, Milchsäure, Weinsäure, Oxalsäure oder Phosphorsäure oder als Quarternierungsmittel, z.B. Methylchlorid, Methyliodid, Dimethylsulfat, Benzylchlorid, Chloressigethylester oder Bromacetamid geeignet. Weitere geeignete Neutralisations- und Quarternierungsmittel sind z.B. in der US-PS 3 479 310, Spalte 6, beschrieben.

Die Neutralisation bzw. Quaternisierung der ionischen oder der potentiell ionischen Gruppen kann vor, während und insbesondere nach der Isocyanat-Polyadditionsreaktion erfolgen.

Gegebenenfalls können auch nichtionische Emulgatoren, wie einwertige Polyetheralkohole des Molgewichtsbereiches 500 bis 10 000 g/mol, vorzugsweise von 1 000 bis 5 000 g/mol mitverwendet werden. Der Einsatz nichtionischer Emulgatoren ist jedoch aufgrund des Gehalts an Verbindungen c) im allgemeinen nicht notwendig.

Aufbaukomponenten d) sind im wesentlichen Verbindungen, welche zwei Hydroxylgruppen, zwei Aminogruppen oder eine Hydroxyl- und eine Aminogruppe enthalten. In Betracht kommen z.B. Dihydroxylverbindungen, wie Propandiol-(1,3), Butandiol-(1,4), Diamine wie Ethylendiamin, Hexamethylendiamin, Piperazin, 2,5-Dimethylpiperazin, 1-Amino-3-aminomethyl- 3,5,5-trimethyl-cyclohexan (Isophorondiamin), 4,4'-Diaminodicyclohexylmethan, 2,4-Diaminocyclohexan, 1,2-Diamino-propan, Hydrazin oder Aminoalkohole wie Ethanolamin, Isopropanolamin, Methylethanolamin oder Aminoethoxyethanol.

Gegebenenfalls können ebenfalls Verbindungen mit mindestens 3 mit Isocyanat reaktiven Gruppen in Betracht kommen, z.B. Triole wie Trimethylolpropan oder Glycerin oder auch Ether- oder Estergruppen aufweisende Trihydroxylverbindungen, sowie Pentaerythrit als Tetrahydroxylverbindung, Triaminverbindungen wie Diethylentriamin, 4-Aminomethyloctandiamin, Trisaminoethylamin, Hydroxyl- und Aminogruppen enthaltende Verbindungen wie Diethanolamin.

Insgesamt wird der Anteil der Aufbaukomponenten vorzugsweise so gewählt, daß die Summe der gegenüber Isocyanat reaktiven Hydroxylgruppen und primären oder sekundären Aminogruppen 0,9 bis 1,3, besonders bevorzugt 0,95 bis 1,1 bezogen auf 1 Isocyanatgruppe beträgt.

Zur Herstellung des Polyurethans können die Aufbaukomponenten a) bis d) in einem niedrig siedenden, mit Wasser

mischbaren organischen Lösungsmittel oder lösungsmittelfrei in bekannter Weise umgesetzt werden, wie es auch in der DE-A-34 37 918 beschrieben ist.

Als Lösungsmittel können alle gegenüber Isocyanaten unreaktiven Lösungsmittel eingesetzt werden. Besonders bevorzugt sind hierbei solche, die mit Wasser in beliebigen Mengen mischbar sind, wie z.B. Tetrahydrofuran, Methylethylketon, N-Methylpyrrolidon und insbesondere Aceton. Weniger bevorzugt sind hochsiedene mit Wasser mischbare Lösungsmittel, wie z.B. N-Metylpyrrolidon oder Dimethylformamid. In untergeordeneten Mengen können ebenfalls Lösungsmittel nicht mit Wasser mischbare Lösungsmittel enthalten sein, wie z.B. Toluol oder Xylol. Vorzugsweise liegt der Siedepunkt des Lösungsmittels unter 100°C.

Die Reaktionstemperatur liegt vorzugsweise bei 50 bis 120°C.

Zur Beschleunigung der Reaktion der Diisocyanate können übliche und bekannte Katalysatoren, wie Dibutylzinndilaurat, Zinn-II-octoat oder 1,4-Diazabicyclo-(2,2,2)-octan, mitverwendet werden.

Das erhaltene Polyurethan, welches im wesentlichen frei von Isocyanatgruppen ist, wird dann in Wasser dispergiert und das organische Lösungsmittel durch Destillation im gewünschten Ausmaß, im allgemeinen vollständig, entfernt.

Die Herstellung des Polyurethans kann auch in der Weise erfolgen, daß in einem organischen Lösungsmittel zunächst ein Polyurethanprepolymer hergestellt wird. Nach Zusatz des Reaktionsprodukts wird das erhaltene Polyurethanprepolymer, welches noch Isocyanatgruppen enthält, in Wasser dispergiert. Danach kann die Umsetzung mit den weiteren Aufbaukomponenten erfolgen. Anschließend kann, wie bereits oben beschrieben, das organische Lösungsmittel entfernt werden.

Die wäßrige Dispersion enthält neben dem Polyurethan ein radikalisch polymerisiertes Polymerisat mit einem Gehalt an Metallsalzgruppen, gebildet aus mindestens zweiwertigen, vorzugsweise zweiwertigen Metallen mit Säuregruppen des Polymerisats.

Das Gehalt an Salzgruppen beträgt 5 bis 1000 mmol, vorzugsweise 10 bis 500 mmol, besonders bevorzugt 10-150 mmol Salzgruppen pro 1 kg der Summe aus A) und B).

Der Gewichtsanteil des Polymerisats B) beträgt 0,1 bis 70 Gew.-%, vorzugsweise 0,2 bis 40 Gew.-%, besonders bevorzugt 0,2 bis 10 Gew.-%, bezogen auf das Polyurethan.

Das Polymerisat B) ist vorzugsweise aufgebaut aus

| | |
|---|---|
| a) 3 bis 60 Gew.-% | einer 3 bis 5 C-Atome enthaltenden $\alpha,\beta$-monoethylenisch ungesättigten Mono- oder Dicarbonsäure |
| b) 97 bis 40 Gew.-% | mindestens eines $C_1$- bis $C_{20}$-Alkyl(meth)acrylats, eines Vinylesters von 1 bis 20 C-Atome enthaltenden Carbonsäuren, eines Vinylaromaten mit bis zu 20 C-Atomen, eines ethylenisch ungesättigten Nitrils mit 3 bis 6 C-Atomen, eines Vinylhalogenids oder eines nichtaromatischen Kohlenwasserstoffs mit 4 bis 8 C-Atomen und mindestns 2 konjugierten Doppelbindungen, und |
| c) 0 bis 50 Gew.-% | mindestens eines weiteren ethylenisch ungesättigten Monomeren, wobei 5 bis 100 mol-% der Säuregruppen aus a) in eine Metallsalzgruppe überführt sind. |

Besonders bevorzugt beträgt der Gewichtsanteil der Monomeren a) 10 bis 50 Gew.-%, derjenigen von b) 90 bis 50 Gew.-% und derjenige von c) 0 bis 20 Gew.-%.

Als Monomere a) eignen sich z.B. Acrylsäure, Methacrylsäure, Maleinsäure, Fumarsäure, Crotonsäure, Itaconsäure und Maleinsäure- bzw. Fumarsäurehalbester, insbesondere von $C_1$-$C_{16}$-Alkanolen.

Bevorzugte Monomere b) sind $C_1$-$C_{20}$, insbesondere $C_1$-$C_{10}$-Alkyl-(meth)acrylate, wie Methylmethacrylat, Methylacrylat, n-Butylacrylat, Ethylacrylat und 2-Ethylhexylacrylat erzielt. Als vinylaromatische Verbindung mit bis zu 20 C-Atomen ist Styrol bevorzugt. Vinylester von Carbonsäuren mit 1 bis 20 C-Atomen sind z.B. Vinylacetat und Vinylpropionat. Verbindungen mit zwei konjugierten Doppelbindungen sind z.B. Butadien, Isopren oder Chloropren.

Bei den weiteren Monomeren c) kann es sich z.B. um $C_1$-$C_{10}$-Hydroxyalkylacrylate, (Meth)acrylnitril, (Meth)acrylamid oder Anhydride wie Maleinsäureanhydrid handeln.

Die Herstellung des Polymerisats erfolgt im allgemeinen durch radikalische Polymerisation. Geeignete Polymerisationsmethoden, wie Substanz-, Lösungs-, Suspensions- oder Emulsionspolymerisation sind dem Fachmann bekannt.

Die Monomeren können z.B. bei der Emulsionspolymerisation wie üblich in Gegenwart eines wasserlöslichen Initiators und eines Emulgators bei vorzugsweise 30 bis 95°C polymerisiert werden. Geeignete Initiatoren sind z.B. Natrium-, Kalium- und Ammoniumpersulfat, tert.Butylhyroperoxide, wasserlöslische Azoverbindungen oder auch Redoxinitiatoren.

Als Emulgatoren dienen z.B. Alkalisalze von längerkettigen Fettsäuren, Alkylsulfate, Alkylsulfonate, alkylierte Arylsulfonate oder alkylierte Biphenylethersulfonate.

Des weiteren kommen als Emulgatoren Umsetzungsprodukte von Alkylenoxiden, insbesondere Ethylen- oder Propylenoxid mit Fettalkoholen, -säuren oder Phenol, bzw. Alkylphenolen in Betracht.

Die Säuregruppen im Polymerisat können z.B. nach der Herstellung des Polymerisats in Salzgruppen überführt werden.

Dazu können z.B. basische Salze, durch welche die Säuregruppen in Salzgruppen überführt werden können, zugesetzt werden.

Bevorzugt werden Oxide, Hydroxide, Carbonate und Hydrogencarbonate von Metallen, insbesondere zweiwertigen Metallen wie Zn oder insbesondere Ca und Mg zugesetzt. Bei diesen basischen Salzen verbleiben nach der Salzbildung mit den Säuregruppen keine freien Gegenionen mehr im Wasser. Die Salzbildung verläuft vielmehr unter Bildung von $H_2O$ bzw. $CO_2$. Die Einarbeitung der basischen Metallverbindungen in die Dispersion oder Lösung des Polymerisats B) erfolgt im allgemeinen unter mehrstündigem Rühren bei einem pH vorzugsweise unter 7, insbesondere unter 3.

Die Metallverbindungen liegen vorzugsweise in feiner Körnung mit einer BET-Oberfläche von 2 bis 5 $m^2/g$ vor (bestimmt nach dem Verfahren von Brunauer, Emmet und Teller, s. P.W. Atkins, Physikalische Chemie, VCH-Verlag, D-6940 Weinheim, 1987, Seite 799 ff).

Bei der Einarbeitung der Metallverbindungen können auch Hilfsstoffe z.B. Netzmittel mitverwendet werden.

Zu erwähnen ist noch, daß bei der Einarbeitung der Metallverbindungen auch von Polymerisaten ausgegangen werden kann, welche statt Säuregruppen z.B. zunächst nur Anhydridgruppen enthalten. Der Anhydridring kann je nach den Bedingungen während der Einarbeitung geöffnet werden, so daß sich ein Polymerisat B mit dem gewünschten Metallsalzgehalt ergibt.

Das Polymerisat B) mit dem gewünschten Salzgruppengehalt kann zu jeder Zeit zu dem Polyurethan, auch während der Herstellung des Polyurethans oder der nach der Herstellung des Polyurethans erhaltenen wäßrigen Polyurethandispersion zugesetzt werden.

Bevorzugt ist die Zugabe des Polymerisats B) zur erhaltenen, wäßrigen Polyurethandispersion, d.h. nach der Dispergierung des Polyurethans in Wasser.

Die erfindungsgemäße wäßrige Dispersion, kann weiterhin ein die Haftung verbesserndes Polymer enthalten. Der Gewichtsanteil dieser Polymeren kann 5 bis 60 Gew.-%, vorzugsweise 5 bis 30 Gew.-%, bezogen auf das Polyurethan betragen.

Das die Haftung verbessernde Polymer wird bevorzugt vor dem Dispergieren des Polyurethans bzw. dessen Prepolymeren in Wasser zugesetzt. Im Falle der Prepolymeren erfolgt dann die weitere Umsetzung zum Polyurethan.

Als haftungsverbessernde Polymere kommen eine Vielzahl von unterschiedlichen Polykondensaten, radikalisch polymerisierten Polymeren oder Polyaddukten in Betracht.

Bevorzugt handelt es sich beim haftungsverbessernden Polymer um Phenol-Formaldehyd-Kondensationsharze bzw. analoge Reaktionsprodukte einer Verbindung (I), ausgewählt aus aromatischen Verbindungen mit einem aromatischen Ring, zwei kondensierten aromatischen Ringen oder zwei durch eine $C_1$-$C_8$-Alkylengruppe verbundenen aromatischen Ringen, welche an mindestens einem Ring durch mindestens eine Hydroxygruppe und an den aromatischen Ringen gegebenenfalls durch 1 bis 3 $C_1$-$C_{12}$-Alkyl- oder -Alkoxygruppen substituiert sind, und den Gemischen diese aromatischen Verbindungen mit einer Verbindung (II), ausgewählt aus Verbindungen mit 1 bis 20 Kohlenstoffatomen und mindestens einer Keto- oder Aldehydgruppe, einem $C_4$-$C_{18}$-Diolefin, Verbindungen mit 2 bis 10 Kohlenstoffatomen und mindestens einer Dreifachbindung, oder deren Gemische.

Als Verbindung (I) sind gegebenenfalls durch 1 bis 3 $C_1$-$C_8$-Alkyl- oder Alkoxygruppen substituiertes Phenol, $\alpha$- oder $\beta$-Naphthol oder Bisphenol A bevorzugt. Die Substituenten befinden sich vorzugsweise in meta-Stellung oder p-Stellung zur Hydroxylgruppe an den aromatischen Ringen.

Als Verbindung (I) sind solche Verbindungen bevorzugt, die ein oder zwei, besonders bevorzugt eine Hydroxylgruppe aufweisen.

Vorzugsweise handelt es sich bei Verbindung (II) um Verbindungen mit 1 bis 14 Kohlenstoffatomen und ein oder zwei, vorzugsweise einer Keto- oder Aldehydgruppe. Diese Verbindungen können aliphatisch oder aromatisch sein oder sowohl aliphatisch als auch aromatische Gruppen enthalten. Vorzugsweise enthalten die Verbindungen neben der Keto- oder Aldehydgruppe keine weiteren funktionellen Gruppen, d.h. keine weiteren Heteroatome neben dem Sauerstoffatom der Aldehyd- oder Ketogruppe.

Als Verbindung (II) seien beispielsweise Formaldehyd, Acetaldehyd, n-Propionaldehyd, Glykolaldehyd, iso-Propionaldehyd, n-Butyraldehyd, iso-Butyraldehyd, Benzaldehyd, Glykolaldehyd, Glyoxal, Glutardialdehyd, Oxaglutardialdehyd, Aceton, Methylethylketon, Benzophenon, Butadien, Cyclopentadien und Bicyclopentadien, Acetylen, Acrolein, Methylacrolein oder deren Mischungen genannt.

Besonders bevorzugt sind Formaldehyd, Acetaldehyd, Propionaldehyd, n- und iso-Butyraldehyd, Aceton und deren Gemische.

Reaktionsprodukte der Verbindungen (I) und (II) sind allgemein bekannt. Die Reaktion verläuft analog zur Phenyl/Formaldehyd-Kondensation durch Addition der Keto-, Aldehydgruppe bzw., der Doppel- oder der Dreifachbindung

vorwiegend in ortho- oder para-Stellung zur Hydroxylgruppe am aromatischen Ring.

Das Molverhältnis der Verbindung (I) zu (II) beträgt bei der Kondensationsreaktion vorzugsweise 1:0,1 bis 1:2, besonders bevorzugt 1:0,7 bis 1:1.

Die Reaktion erfolgt im allgemeinen durch Vorlegen der Verbindung (I) mit einer Säure als Katalysator, z.B. einer Halogenwasserstoffsäure, Bortrifluorid, Schwefelsäure, p-Toluolsulfonsäure, Dodecylbenzolsulfonsäure und anschließendem Zudosieren der Verbindung (II) bei 0 bis 250°C, vorzugsweise 20 bis 230°C.

Nach Ende des Zudosierens kann noch nachkondensiert werden, insbesondere bei Temperaturen von 20 bis 250°C, vorzugsweise von 80 bis 200°C. Während der Reaktion kann, falls gewünscht, Wasser gegeb. unter Verwendung eines Schleppmittels aus dem Reaktionsgemisch entfernt werden.

Der Verlauf der Umsetzung kann durch Messen des Erweichungspunktes des entstandenen Reaktionsprodukts kontrolliert werden.

Die Reaktionsprodukte haben vorzugsweise einen Erweichungspunkt (bestimmt nach DIN 52 011) von 50°C bis 200°C, besonders bevorzugt von 80 bis 140 und ganz besonders bevorzugt von 120 bis 140°C.

Weiterhin eignen sich auch Epoxidharze, vorzugsweise Umsetzungsprodukte von Epoxiden wie Epichlorhydrin mit Bisphenol A; bevorzugt sind solche mit Molgewichten (Gewichtsmittel $\overline{M}_n$) zwischen 500 und 5000 und Erweichungstemperaturen im Bereich zwischen 80 und 130$^0$C.

Ferner kommen als haftungsverbessernde Polymere auch Polyvinylacetat, Polyvinylchlorid, Polymethacrylate, Styrol/Acrylnitril-Copolymerisate, Polyamide, Polyether, Polyester, Polyetherdiole, Polyesterdiole, Polyurethane, insbesondere salzgruppenfreien Polyurethane, und Phenacrylat in Betracht.

Als Polyvinylacetate werden die Homopolymerisate des Vinylacetates bevorzugt. Einsetzbar sind auch seine Copolymerisate, die bis zu 10 Gew.-% Comonomere wie Vinyllaurat, Vinylstearat oder bevorzugt (Meth)acrysäure-, Fumarsäure- oder Maleinsäureester mit $C_1$- bis $C_8$-Alkanolen wie Methanol, n-Butanol oder 2-Ethylhexanol enthalten. Die Polymerisate weisen üblicherweise einen K-Wert, gemessen bei 25°C in Cyclohexanon nach DIN 53 726, von 45 bis 60 auf. Unter Polyvinylchlorid werden im allgemeinen die Homopolymerisate des Vinylchlorids und seine Copolymerisate, die bis zu 10 Gew.-% an Comonomeren wie Ethylen oder Vinylacetat enthalten, verstanden. Ihr K-Wert (25°C, Cyclohexanon, DIN 53 726) sollte zwischen 45 und 55 liegen. Als Polymethacrylat setzt der Fachmann üblicherweise Homopolymerisate des Methylacrylats oder seine Copolymerisate mit bis zu 10 Gew. -%, bezogen auf das Copolymerisat, an Vinylacetat, Acrylsäureestrn von $C_1$- bis $C_8$-Alkanolen oder Methacrylsäureestern mit $C_2$- bis $C_8$-Alkanolen ein. Ihr Schmelzindex MFI, bestimmt nach DIN 53 735 (230°C/3,8 kg) liegt im allgemeinen zwischen 0,1 und 3,0. Die Herstellung dieser Polymerisate erfolgt im allgemeinen durch radikalische Polymerisation der ethylenisch ungesättigten Monomeren zwischen 30 und 150°C in Substanz, Lösung oder Emulsion mit anschließender Trocknung. Solche Polymerisate sind allgemein bekannt, z.B. aus Houben-Weyl, Methoden der organischen Chemie, Band E20, 1987, Seiten 1115-1125, 1041-1062 und 1141-1174.

Geeignete Polyamide haben eine K-Wert von 65 bis 80, gemessen in $H_2SO_4$ bei 25°C nach DIN 53 727. Es handelt sich üblicherweise um Polymere, die sich von Lactamen mit 7 bis 13 Ringgliedern wie ε-Caprolactam, ε-Capryllactam oder ω-Laurinlactam ableiten, beispielsweise wie Polycaprolactam (PA6), sowie um Polyamide, die durch Umsetzen von Dicarbonsäuren mit Diaminen erhalten werden. Beispiele hierfür sind Polyhexamethylenadipinamid (PA66), Polyhexamethylensebacinamid (PA610) oder Polyhexamethylendodecanamid (PA612). Geeignete Dicarbonsäuren sind beispielsweise Alkandicarbonsäuren mit 4 bis 12, insbesondere 6 bis 10 Kohlenstoffatomen sowie Phthalsäure, Terephthalsäure und Isophthalsäure sowie beliebige Mischungen dieser Säuren. Als Diamine seien beispielsweise Alkandiamine mit 4 bis 12, insbesondere 4 bis 8 Kohlenstoffatomen, ferner m-Xylylendiamin, p-Xylylendiamin, deren hydrierte Derivate, Bis-(4-aminophenyl)methan, Bis-(4-aminocyclohexyl)methan oder Bis(4-aminophenyl)propan-2,2 oder deren Mischungen genannt. Aufgrund der guten Löslichkeit werden Copolymere bevorzugt, beispielsweise ein Copolyamid aus 30 bis 40 Gew.-% Adipinsäure, 15 bis 20 Gew.-% Hexamethylendiamin, 30 bis 35 Gew.-% und 15 bis 20 Gew.-% ε-Caprolactam bzw. ε-Aminocapronsäure. Die Herstellung dieser bekannten Polymeren ist allgemeines Fachwissen, s. beispielsweise Römpp, Chemielexikon, 8. Auflage, Seiten 2861, 3058 und 3267, oder EP-A-129 195 und EP-A-129 196.

Die Polyetherdiole sind an sich bekannt, beispielsweise aus Kunststoff-Handbuch Bd. 7 (1983) Seiten 42 bis 54. Genannt seien Polyethylenoxid, Polypropylenoxid oder Polytetrahydrofuran oder deren Copolymere mit zwei endständigen Hydroxylgruppen. Sie werden in bekannter Weise hergestellt durch im allgemeinen anionische Polyaddition, s. beispielsweise N.G. Gaylord, High Polymers, Bd. 13, New York 1963, Part I. Untergeordnete Bedeutung haben Polyetherole, die zur Reaktivitätserhöhung mit Ethylenoxid gepfropft sind. Die Polyetherdiole haben im allgemeinen ein Molekulargewicht von 300 bis 3000, was einem K-Wert in DMF bei 25° nach DIN 53 726 vom 25 bis 60 entspricht. Bevorzugte Molekulargewichte liegen zwischen 800 und 2200.

Als Polyether verwendet man beispielsweise Polyethylenoxid, Polypropylenoxid oder Polytetrahydrofuran. Die Polyether weisen üblicherweise einen K-Wert in DMF bei 25°C nach DIN 53 726 von 20 bis 50 auf. Sie sind allgemein bekannt z.B. aus Encyclopedia of Polymer Science and Technology, Band 6, 1967, Seite 103 und folgende, Band 9, 1968, Seite 668 und folgende und Band 13, 1970, Seite 670 und folgende.

Als Polyester werden monomerfreie ungesättigte Polyesterharze bevorzugt. Diese sind bekannte Kondensationsprodukte aus mehrwertigen, insbesondere zweiwertigen Carbonsäuren oder deren veresterbaren Derivaten, insbesondere deren Anhydride, die mit mehrwertigen, insbesondere zweiwertigen Alkoholen verestert sind, und ggf. zusätzliche Reste einwertiger Carbonsäuren oder einwertiger Alkohole enthalten. Als Ausgangsstoff seien genannt: Maleinsäure, Fumarsäure, Phthalsäure, Isophthalsäure, Terephthalsäure, Maleinsäureanhydrid, Phthalsäureanhydrid, Isophthalsäureanhydrid, Ethylenglykol, Propylenglykol, Butandiol-1,4 oder Neopentylglykol. Untergeordnete Bedeutung im Sinne der Erfindung haben solche Harze, die durch Cokondensation von Bisphenol A, Epichlorhydrinbisphenol A Kondensaten und Methacrylsäure hergestellt werden. Monomerfrei in diesem Zusammenhang bedeutet, daß diese sogenannten UP-Harze nicht in zur Vernetzung geeigneten Monomeren wie Styrol gelöst sind. Die Produkte haben üblicherweise eine Viskosität bei 150°C von 1000 bis 6000 mPa·s, insbesondere 2000 bis 4000 mPa·s.

Als Polyesterdiole sind Kondensationsprodukte, die zwei endständige OH-Gruppen aufweisen, aus Dicarbonsäuren wie Adipinsäure oder Isophthalsäure mit Diolen wie beispielsweise Butandiol-(1,4), Hexandiol-(1,6) oder Neopentylglykol, geeignet.

Der Molekulargewichtsbereich der einsetzbaren Polyesterdiole liegt im allgemeinen zwischen 300 und 5000. Bevorzugt wird ein Molekulargewicht zwischen 800 und 2500, entsprechend einem K-Wert in DMF bei 25°C nach DIN 53 276 von 30 bis 55. Diese Polymeren und ihre Herstellung sind allgemein bekannt aus Kunststoff-Handbuch Bd. 7 (1983) Seiten 54 bis 62, und DE 12 68 842.

Salzgruppenfreie Polyurethane sind bekannte Additionspolymere auf Basis von Polyether- oder Polyesterdiolen, Isocyanaten wie Hexamethylendiisocyanat, 2,4-Diisocyanatodiphenylmethan und eventuell bi- oder trifunktionellen Kettenverlängerern, die noch üblichen Verfahren (Kunststoff-Handbuch, Karl-Hanser-Verlag, Band 7, (1966) hergestellt werden. Bevorzugt werden niedermolekulare Kondensate (K-Wert in DMF bei 25°C nach DIN 53 726 zwischen 25 und 60) eingesetzt. Vernetzte Polyurethane haben untergeordnete Bedeutung.

Phenacrylate werden bevorzugt durch Addition von mit Acrylsäure oder Methacrylsäure veresterten Bisphenol A Glycidethern mit Terephthalsäure hergestellt. Ebenso können Phenacrylate auf Basis von epoxydierten Novolaken eingesetzt werden. Die K-Werte der Polymerisate liegen im allgemeinen zwischen 30 und 55 (in Cyclohexan bei 25°C nach DIN 53 726).

Die erfindungsgemäßen wäßrigen Dispersionen weisen bevorzugt einen Feststoffgehalt von 10 bis 70 Gew.-%, insbesondere 20 bis 50 Gew.-% auf.

Sie können z.B. als Beschichtungsmittel für unterschiedlichste Substrate oder bevorzugt als Klebstoff, insbesondere als Kontaktkleber zum Verkleben verschiedenster Substrate, z.B. von Holz, Kunststoff, Glas und Metall verwendet werden. Zur Erzielung spezieller Eigenschaften können den Dispersionen weitere Zusatzstoffe wie Weichmacher, Filmbildehilfsmittel, Füllstoffe etc. oder auch Polyacrylate, Polyvinylacetate, Styrol/Butadien-Copolymerisate als Mischungskomponente zugesetzt werden. Vorteilhafterweise werden Klebstoffbeschichtungen auf die Oberflächen beider zu verklebenden Substrate aufgetragen.

Die wäßrigen Dispersionen ergeben Verklebungen mit hoher Festigkeit, insbesondere einer hohen Wärmestandfestigkeit.

Beispiele

Die in den nachfolgenden Beispielen verwendeten Abkürzungen haben die nachstehend wiedergegebenen Bedeutungen:

ADS = Adipinsäure
B14 = 1,4-Butandiol
TDI = Toluylendiisocyanat
HDI = Hexamethylendiisocyanat
IPDI = Isophorondiisocyanat
PUD = Na-Salz des Michael-Addukts aus Acrylsäure und Ethylendiamin
DBTL = Dibutylzinndilaurat
DMPA = Dimethylolpropionsäure
TMP = Trimethylolpropan

Beispiel 1A (Vergleichsbeispiel)

| | Molmenge [mmol] | Gewichtsteile [g] |
|---|---|---|
| Polyesterdiol (OH-Zahl: 45,0) | 198 | 492 |

(fortgesetzt)

| | Molmenge [mmol] | Gewichtsteile [g] |
|---|---|---|
| TDI | 147 | 25,6 |
| HDI | 178 | 24,7 |
| DBTL | | 0,1 |
| Aceton I | | 133 |
| | | |
| Aceton II | | 532 |
| PUD-Salz (40%ig) | 94 | 42,0 |
| Phenol-Formaldehyd-Kondensationsharz, Erweichungstemperatur (DIN 52 011) 128°C) | | 240 |
| Aceton III | | 240 |
| entiontes Wasser | | 1200 |

Der Mischung aus entwässertem Polyesterdiol, hergestellt aus Adipinsäure und 1,4-Butandiol, Aceton I und Katalysator wurde das TDI zugegeben. Nach einer Stunde Reaktionszeit bei 65°C wurde das HDI zugesetzt und weitere 90 Minuten umgesetzt. Nach Zulauf von Aceton II hatte die Reaktionsmischung einen NCO-Gehalt von 0,75 %. Bei 50°C wurde mit PUD-Salz, das als 40%ige Lösung in Wasser vorliegt, kettenverlängert. Nach 5 Minuten wurde die Harzlösung, hergestellt aus Aceton III und einem Kondensat aus Phenol und Formaldehyd und zugesetzt und 5 Minuten bei 50°C gerührt. Anschließend wurde mit Wasser dispergiert und das Aceton abdestilliert. Die Dispersion wird danach durch Rückverdünnung mit entiontem Wasser auf einen Feststoffgehalt von 40 % eingestellt.

Beispiel 2A (Vergleichsbeispiel)

| | Molmenge [mmol] | Gewichtsteile [g] |
|---|---|---|
| Polyesterdiol (OH-Zahl: 45,0) | 191 | 476 |
| 1,4-Butandiol | 176 | 14,1 |
| Trimethylolpropan | 17,4 | 2,3 |
| IPDI | 436 | 96,9 |
| DBTL | | 0,2 |
| Aceton I | | 133 |
| | | |
| Aceton II | | 532 |

| | Molmenge [mmol] | Gewichtsteile [g] |
|---|---|---|
| PUD-Salz (40%ig) | 94 | 35,0 |
| Phenol-Formaldehyd-Kondensationsharz, Erweichungstemperatur (DIN 52 011) 128°C | | 240 |
| Aceton III | | 240 |
| entiontes Wasser | | 1200 |

Der Mischung aus entwässertem Polyesterol, hergestellt aus Adipinsäure und 1,4-Butandiol, 1,4-Butandiol, Trimethylolpropan, Aceton I und Katalysator wurde das IPDI zugegeben und 130 Minuten umgesetzt. Nach Zulauf von Aceton II hat die Reaktionsmischung einen NCO-Gehalt von 0,57 %.

Bei 50°C wurde mit PUD-Salz, das als 40%ige Lösung in Wasser vorliegt, kettenverlängert. Nach 5 Minuten wurde die Harzlösung, hergestellt aus Aceton III und einem Kondensat aus Phenol und Formaldehyd, zugesetzt und 5 Minuten bei 50°C gerührt. Anschließend wurde mit Wasser dispergiert und das Aceton abdestilliert. Die Dispersion wird danach durch Rückverdünnung mit entiontem Wasser auf einen Feststoffgehalt von 40 % eingestellt.

Beispiel 3A (Vergleichsbeispiel

| | Molmenge [mmol] | Gewichtsteile [g] |
|---|---|---|
| Polypropylenoxid (OH-Zahl: 56) | 298 | 597 |
| Dimethylolpropionsäure | 160 | 21,5 |
| TDI | 867 | 151 |
| DBTL | | 0,3 |
| 30 gew.-%ige NaOH-Lösung | 112 | 4,5 |
| Aceton | | 978 |
| entiontes Wasser | | 1200 |

Der Mischung aus entwässertem Polypropylenoxid, Dimethylolproionsäure und Katalysator wurde das TDI zugegeben und bei einer Reaktionstemperatur von 105°C 3 Stunden umgesetzt. Nach Zulauf von Aceton hatte die Reaktionsmischung einen NCO-Gehalt von 0,45 %.

Nach dem Abkühlen der Lösung auf 30°C wurde die NaOH-Lösung zugesetzt und innerhalb von 20 Minuten mit Wasser dispergiert, und das Aceton abdestilliert. Die Dispersion wurde danach durch Rückverdünnung mit entiontem Wasser auf einen Feststoffgehalt von 40 % eingestellt.

Beispiel 4A (Vergleichsbeispiel)

Die Herstellung der Dispersion erfolgt analog zu Vergleichsbeispiel 1. Statt des Phenol-Formaldehyd-Harzes wird jedoch ein Harz auf Basis Phenol und einem Gemisch aus n- und iso-Butyraldehyd eingesetzt (Molverhältnis n- zu iso-Butylraldehyd = 1:1). Erweichungspunkt (DIN 52 011): 153°C

Beispiel 5A (Vergleichsbeispiel):

| | Molmenge [mmol] | Gewichtsteile [g] |
|---|---|---|
| Polyesterdiol (OH-Zahl: 45,0) | 196 | 489 |
| TDI | 159 | 27,8 |

(fortgesetzt)

| | Molmenge [mmol] | Gewichtsteile [g] |
|---|---|---|
| HDI | 159 | 26,8 |
| DBTL | | 0,1 |
| Aceton I | | 133 |
| | | |
| Aceton II | | 532 |
| PUD-Salz (40%ig) | 94 | 42,0 |
| Phenol-iso-Butyraldehyd-Kondensationsharz, Erweichungstemperatur (DIN 52 011) 132°C) | | 240 |
| Aceton III | | 240 |
| entiontes Wasser | | 1200 |

Die Herstellung erfolgt analog zu Beispiel 1, mit der Ausnahme, daß die Reaktionszeit mit HDI auf 80 Minuten verlängert ist.

Beispiel 6A (Vergleichsbeispiel):

| | Molmenge [mmol] | Gewichtsteile [g] |
|---|---|---|
| Polyetherol (OH-Zahl:56) | 200 | 401 |
| Dimethylolpropion-säure | 161 | 21,6 |
| TDI | 670 | 117 |
| DBTL | | 0,1 |
| | | |
| Aceton I | | 684 |

| | Molmenge [mmol] | Gewichtsteile [g] |
|---|---|---|
| Phenol-iso-Butyraldehyd-Kondensationsharz, Erweichungstemperatur (DIN 52 011) 128°C) | | 240 |
| Aceton II | | 240 |
| entiontes Wasser | | 1200 |
| 30 gew.-%ige NaOH-Lösung | 112 | 4,5 |

Der Mischung aus entwässertem Polyetherol (Polypropylenoxid mit einer OH-Funktionalität von 1,93 val/mol), Dimethyylolpropionsäure und Katalysator wurde das TDI zugegeben und bei einer Reaktionstemperatur von 105°C 3 Stunden umgesetzt. Nach Zulauf von Aceton I hatte die Reaktionsmischung einen NCO-Gehalt von 0,56 %.

Anschließend wurde die Harzlösung, hergestellt aus Aceton II und einem Kondensat aus Phenol und einem Gemisch aus n-Butyraldehyd und iso-Butyraldehyd (Molverhältnis 1:1) zugesetzt. Nach dem Abkühlen der Lösung auf

30°C wurde die NaOH-Lösung zugesetzt und innerhalb von 20 Minuten mit Wasser dispergiert, und das Aceton abdestilliert. Die Dispersion wurd danach durch Rückverdünnung mit entiontem Wasser auf einen Feststoffgehalt von 40 % eingestellt.

Beispiele 1B-6B

Den Polyurethandispersionen 1A-6A wurden 0,5 Gew.-%, bezogen auf das Polyurethan eines Copolymeren aus 40 Gew.-% Acrylsäure und 60 Gew.-% n-Butylacrylat zugegeben. Die Säuregruppen in Copolymeren lagen durch Zusatz von einer äquivalenten Mengen CaO zu 100 mol-% als Ca-Salzgruppen vor.

Beispiele 1C-6C

Wie Beispiele 1B-6B, jedoch wurde statt CaO MgO zugesetzt, so daß entsprechend Mg-Salzgruppen vorlagen.

Kontaktverklebung bei Raumtemperatur

Probenvorbereitung:

Die Dispersionen wurden mit 5 Gew.-%, bezogen auf Ihren Feststoff, pyrogener Kieselsäure angedickt.

Scherfestigkeit:

Mit einem Rakel mit 1 mm-Zahnung wurden die jeweiligen Dispersionen auf Buchenholzscheiben auf einer Fläche von 150 x 50 mm2 aufgetragen und 60 Minuten bei Raumtemperatur getrocknet. Diese Prüfkörper wurden sofort danach verklebt, indem sie 30 Sekunden bei Raumtemperatur mit einem Druck von 0,5 N/mm2 verpreßt wurden. Die Scherfestigkeit wurde sofort (Sofortfestigkeit) und nach 7 Tagen Lagerung bei Raumtemperatur (Endfestigkeit) in N/mm2 gemessen.

Wärmestandfestigkeit:

Eine Hartfaserplatte wurde auf einer Fläche von 200 x 200 mm2 mit einer PVC-Folie verklebt (Kontaktverklebung bei Raumtemperatur). In einem Abschälwinkel von 180° wurde die PVC-Folie mit 300g belastet. Die Temperatur wurde alle 30 Minuten um 10°C erhöht. Angegeben ist die maximale Temperatur, bei der die PVC-Folie sich noch nicht vollständig von der Hartfaserplatte löst.

Klebetechnische Werte der Kontaktverklebung bei Raumtemperatur

| | Sofortfestigkeit [N/mm²] | | | Endfestigkeit [N/mm²] | | | Wärmestandfestigkeit [°C] | | |
|---|---|---|---|---|---|---|---|---|---|
| | A | B | C | A | B | C | A | B | C |
| Bsp. 1 | 1,2 | 1,2 | 1,0 | 3,0 | 3,0 | 2,9 | 70 | 80 | 90 |
| Bsp. 2 | 1,0 | 1,0 | 1,0 | 2,7 | 2,5 | 2,5 | 80 | 110 | 110 |
| Bsp. 3 | 0,5 | 0,5 | 0,5 | 1,5 | 1,7 | 1,4 | 70 | 80 | 80 |
| Bsp. 4 | 1,4 | 1,4 | 1,2 | 4,2 | 4,0 | 3,8 | 60 | 80 | 80 |
| Bsp. 5 | 1,5 | 1,4 | 1,3 | 5,0 | 4,8 | 4,7 | 60 | 80 | 90 |
| Bsp. 6 | 1,0 | 0,9 | 0,8 | 4,3 | 4,1 | 4,0 | 70 | 90 | 90 |

Prüfung der Kontaktverklebung nach (Wärmeaktivierung) Blitzaktivierung

Probenvorbereitung:

Die Dispersionen wurden mit 2,0 Gew.-%, bezogen auf Ihren Feststoff, Polyvinylpyrrolidon angedickt.

Schälfestigkeit:

Die Dispersionen werden mit einem Pinsel (1 Zoll, feine Borsten) gleichmäßig auf Styrol-Butadiengummi (SBR1-Gummi mit einer shore-A-Härte von 90 (s. DIN 16 909)) auf einer Fläche von 30 x 130 $mm^2$ aufgestrichen und 45 Minuten bei Raumtemperatur getrocknet. Nach einmaliger Aufheizung der Klebstoffilme durch IR-Strahlung auf 80°C im Verlauf von ca. 5 Sekunden (Blitzaktivierung) wurden die Proben 10 Sekunden mit 0,5 $N/mm^2$ verpreßt. Die Schälfestigkeit wurde sofort (Sofortfestikgeit) und nach 5 Tagen Lagerung im Klimaraum (23°C/50% rel.) (Endfestigkeit) nach DIN 52273 gemessen.

Wärmestandfestigkeit:

Die Prüfkörper wurden wie zur Schälfestigkeitsprüfung hergestellt. Nach Temperung von 1 Stunde bei 50°C wurden sie bei 50°C jeweils 10 Minuten mit 5, 10, 15, 20, 25 und 30 N in aufsteigender Reihenfolge belastet. Hielt die Verklebung, so wurde die Probe entlastet, 30 Minuten auf 60°C aufgeheizt und wieder bis max. 30 N in 10 Minutenschritten geprüft. In gleicher Weise wurde die Prüfung nach jedem Durchlauf um 10°C erhöht. Angegeben sind jeweils die Temperatur (°C) und die Belastung (N) bei der eine Öffnung der Verklebung von mehr als 50 mm erkennbar war.

Klebetechnische Werte der Kontaktverklebung nach Blitzaktivierung

| | Sofortfestigkeit [N/mm²] | | | Endfestigkeit [N/mm²] | | | Wärmestandfestigkeit [°C] | | |
|---|---|---|---|---|---|---|---|---|---|
| | A | B | C | A | B | C | A | B | C |
| Bsp. 1 | 1,5 | 1,4 | 1,3 | 2,4 | 2,6 | 2,4 | 50/30 | 70/10 | 60/30 |
| Bsp. 2 | 3,3 | 3,2 | 3,0 | 3,5 | 3,7 | 3,4 | 60/20 | 80/5 | 70/30 |
| Bsp. 3 | 0,8 | 0,8 | 0,8 | 3,8 | 3,9 | 3,8 | 60/30 | 70/10 | 70/10 |
| Bsp. 4 | 2,5 | 2,5 | 2,3 | 4,5 | 4,3 | 4,4 | 50/30 | 60/30 | 70/05 |
| Bsp. 5 | 2,6 | 2,6 | 2,4 | 3,7 | 3,9 | 3,9 | 50/5 | 50/30 | 50/30 |
| Bsp. 6 | 1,0 | 1,0 | 1,0 | 4,3 | 4,1 | 4,2 | 60/20 | 70/30 | 70/25 |

**Patentansprüche**

1. Wäßrige Dispersion, enthaltend

   A) ein Polyurethan, im wesentlichen aufgebaut aus

      a) organischen Polyisocyanaten

      b) Polyhydroxylverbindungen mit einem Molekulargewicht über 500 bis 5000 g/mol

      c) Verbindungen mit mindestens einer gegenüber Isocyanaten reaktiven Gruppe und mit mindestens einer ionischen Gruppe oder in eine ionische Gruppe überführbaren Gruppe

      d) gegebenenfalls von c) verschiedenen Verbindungen mit mindestens zwei gegenüber Isocyanat reaktiven funktionellen Gruppen und einem Molgewicht von 60 bis 500 g/mol

   und

   B) 0,1 bis 70 gew.-%, bezogen auf das Polyurethan eines radikalisch polymerisierten Polymerisates mit einem Gehalt an Metallsalzgruppen, gebildet aus mindestens zweiwertigen Metallen mit Säuregruppen des Polymerisats, wobei der Salzgruppengehalt 5 bis 1000 mmol Salzgruppen pro kg der Summe von A) und B) beträgt.

2. Wäßrige Dispersion gemäß Anspruch 1, wobei es sich bei den Metallen in den Metallsalzen von B) um zweiwertige Metalle handelt.

3. Wäßrige Dispersion gemäß Anspruch 1 oder 2, wobei das Polymerisat B) aufgebaut ist aus

| | |
|---|---|
| a) 3 bis 60 Gew.-% | einer 3 bis 5 C-Atome enthaltenden $\alpha,\beta$-monoethylenisch ungesättigten Mono- oder Dicarbonsäure |
| b) 97 bis 40 Gew. -% | mindestens eines $C_1$- bis $C_{20}$-Alkyl(meth)acrylats, eines Vinylesters von 1 bis 20 C-Atome enthaltenden Carbonsäuren, eines Vinylaromaten mit bis zu 20 C-Atomen, eines ethylenisch ungesättigten Nitrils mit 3 bis 6 C-Atomen, eines Vinylhalogenids oder eines nichtaromatischen Kohlenwasserstoffs mit 4 bis 8 C-Atomen und mindestns 2 konjugierten Doppelbindungen, und |
| c) 0 bis 50 Gew.-% | mindestens eines weiteren ethylenisch ungesättigten Monomeren |

   und 5 bis 100 mol-% der Säuregruppen aus a) in eine Metallsalzgruppe überführt sind.

4. Wäßrige Dispersionen gemäß einem der Ansprüche 1 bis 3, wobei das Salzgruppen enthaltende Polymerisat B) durch Umsetzung eines Säuregruppen oder Säureanhydridgruppen enthaltenden Polymerisats mit einem Oxid, Hydroxyd, Carbonat oder Hydrogencarbonat eines zweiwertigen Metalls erhältlich ist.

5. Wäßrige Dispersion gemäß einem der Ansprüche 1 bis 4, wobei die Dispersion zusätzlich 5 bis 60 Gew.-%, bezogen auf das Polyurethan, eines die Haftung verbessernden, von A) und B) verschiedenen Polymeren enthält.

6. Wäßrige Dispersion gemäß Anspruch 5, wobei das die Haftung verbessernde Polymer dem Polyurethan oder einem Polyurethanprepolymeren vor der Dispergierung in Wasser zugesetzt wird und im Falle des Polyurethanprepolymeren danach die weitere Umsetzung zum Polyurethan erfolgt.

7. Verwendung einer wäßrigen Dispersion nach einem der Ansprüche 1 bis 6 als Klebstoff.

8. Verklebungen, erhältlich unter Verwendung einer wäßrigen Dispersion nach einem der Ansprüche 1 bis 6.

9. Verwendung einer wäßrigen Dispersion nach einem der Ansprüche 1 bis 6 als Beschichtungsmittel.

10. Beschichtete Substrate, erhältlich unter Verwendung einer wäßrigen Dispersion nach einem der Ansprüche 1 bis 6.

**Claims**

1. An aqueous dispersion containing

   A) a polyurethane essentially composed of

      a) organic polyisocyanates,
      b) polyhydroxy compounds having a molecular weight of from above 500 to 5,000 g/mol,
      c) compounds having at least one group reactive toward isocyanates and having at least one ionic group or group convertible into an ionic group,
      d) if required, compounds which differ from c) and have at least two functional groups reactive toward isocyanate and a molecular weight of from 60 to 500 g/mol,

   and
   B) from 0.1 to 70% by weight, based on the polyurethane, of a free radical polymer containing metal salt groups, formed from at least divalent metals with acid groups of the polymer, the content of salt groups being from 5 to 1,000 mmol of salt groups per kg of the sum of A) and B).

2. An aqueous dispersion as claimed in claim 1, wherein the metals from the metal salts of B) are divalent metals.

3. An aqueous dispersion as claimed in claim 1 or 2, wherein the polymer B) is composed of

   a) from 3 to 60% by weight of an $\alpha,\beta$-monoethylenically unsaturated mono- or dicarboxylic acid of 3 to 5 carbon atoms,
   b) from 97 to 40% by weight of at least one $C_1$-$C_{20}$-alkyl (meth)acrylate, one vinyl ester of a carboxylic acid of 1 to 20 carbon atoms, one vinyl aromatic of up to 20 carbon atoms, one ethylenically unsaturated nitrile of 3 to 6 carbon atoms, one vinyl halide or one nonaromatic hydrocarbon having 4 to 8 carbon atoms and at least 2 conjugated double bonds and
   c) from 0 to 50% by weight of at least one further ethylenically unsaturated monomer

   and from 5 to 100 mol % of the acid groups from a) are converted into a metal salt group.

4. An aqueous dispersion as claimed in any of claims 1 to 3, wherein the polymer B) containing salt groups is obtainable by reacting a polymer containing acid groups or anhydride groups with an oxide, hydroxide, carbonate or bicarbonate of a divalent metal.

5. An aqueous dispersion as claimed in any of claims 1 to 4, wherein the dispersion additionally contains from 5 to 60% by weight, based on the polyurethane, of an adhesion-improving polymer which differs from A) and B).

6. An aqueous dispersion as claimed in claim 5, wherein the adhesion-improving polymer is added to the polyurethane or to a polyurethane prepolymer before dispersing in water and, in the case of the polyurethane prepolymer, the further reaction to give the polyurethane is then carried out.

7. Use of an aqueous dispersion as claimed in any of claims 1 to 6 as an adhesive.

8. An adhesive bond obtainable using an aqueous dispersion as claimed in any of claims 1 to 6.

9. Use of an aqueous dispersion as claimed in any of claims 1 to 6 as a coating material.

10. A coated substrate obtainable using an aqueous dispersion as claimed in any of claims 1 to 6.

**Revendications**

1. Dispersion aqueuse, contenant

   A) un polyuréthanne, essentiellement composé de

a) polyisocyanates organiques,
b) composés polyhydroxylés ayant un poids moléculaire supérieur à 500 jusqu'à 5000 g/mole,
c) composés comportant au moins un groupement réactif à l'égard des isocyanates et au moins un groupement ionique ou un groupement qui peut être transformé en un groupement ionique,
d) éventuellement, composés différents de c), comportant au moins deux groupements fonctionnels réactifs aux isocyanates et ayant un poids moléculaire de 60 à 500 g/mole,

et
B) 0,1 à 70% en poids, par rapport au polyuréthanne, d'un polymère obtenu par polymérisation radicalaire, contenant des groupements sels métalliques formés à partir de métaux au moins bivalents avec des groupements acides du polymère, la teneur en groupements sels étant comprise entre 5 et 1000 mmoles de groupements sels par kg de la somme de A) et B).

**2.** Dispersion aqueuse selon la revendication 1, dans laquelle il s'agit de métaux bivalents en ce qui concerne les métaux dans les sels métalliques de B).

**3.** Dispersion aqueuse selon la revendication 1 ou 2, dans laquelle le polymère B) est composé de

a) 3 à 60% en poids d'un acide mono- ou dicarboxylique à insaturation $\alpha,\beta$-monoéthylénique contenant 3 à 5 atomes de carbone,
b) 97 à 40% en poids d'au moins un (méth)acrylate d'alkyle en $C_1$-$C_{20}$, un ester vinylique d'acide carboxylique contenant 1 à 20 atomes de carbone, un composé vinylaromatique renfermant jusqu'à 20 atomes de carbone, un nitrile à insaturation éthylénique à 3-6 atomes de carbone, un halogénure de vinyle ou un hydrocarbure non aromatique renfermant 4 à 8 atomes de carbone et au moins 2 doubles liaisons conjuguées, et
c) 0 à 50% en poids d'au moins un autre monomère à insaturation éthylénique,

et 5 à 100% en moles des groupements acides de a) sont transformés en un groupement sel métallique.

**4.** Dispersion aqueuse selon l'une quelconque des revendications 1 à 3, dans laquelle le polymère B) contenant des groupements sels est obtenu par réaction d'un polymère contenant des groupements acide ou des groupements anhydride avec un oxyde, un hydroxyde, un carbonate ou un hydrogénocarbonate d'un métal bivalent.

**5.** Dispersion aqueuse selon l'une quelconque des revendications 1 à 4, la dispersion contenant en plus 5 à 60% en poids, par rapport au polyuréthanne, d'un polymère améliorant l'adhérence, différent de A) et de B).

**6.** Dispersion aqueuse selon la revendication 5, le polymère améliorant l'adhérence étant ajouté au polyuréthanne ou à un prépolymère de polyuréthanne avant la dispersion dans de l'eau et, dans le cas du prépolymère de polyuréthanne, la réaction complémentaire en polyuréthanne étant ensuite effectuée.

**7.** Utilisation d'une dispersion aqueuse selon l'une quelconque des revendications 1 à 6 comme colle.

**8.** Collages, réalisés en utilisant une dispersion aqueuse selon l'une quelconque des revendications 1 à 6.

**9.** Utilisation d'une dispersion aqueuse selon l'une quelconque des revendications 1 à à comme produit d'enduction.

**10.** Substrats enduits, obtenus en utilisant une dispersion aqueuse selon l'une quelconque des revendications 1 à 6.